# EUROPEAN PATENT APPLICATION

(11) **EP 3 671 730 A1**
(43) Date of publication of application: **24.06.2020**
(21) Application number: 18846171.9
(22) Date of filing: 03.08.2018
(51) Int. Cl.: G10L 15/10, G10L 15/22, G06F 3/16

(54) **INFORMATION PROCESSING DEVICE, INFORMATION PROCESSING METHOD, AND PROGRAM**

(30) Priority: 17.08.2017 JP 2017157540
(71) Applicant: Sony Corporation, Tokyo 108-0075 (JP)
(72) Inventor: TAKI Yuhei, Tokyo 108-0075 (JP); KAWANO Shinichi, Tokyo 108-0075 (JP); IWASE Hiro, Tokyo 108-0075 (JP)
(74) Representative: MFG Patentanwälte Meyer-Wildhagen Meggle-Freund Gerhard PartG mbB
(86) International application number: PCT/JP2018/029180
(87) International publication number: WO 2019/035373

(57) **Abstract**

The present technology relates to an information processor, an information processing method, and a program that allow a user to obtain a speech recognition result that the user expects. A search unit retrieves a second word that is a candidate for replacement of a first word with a predetermined attribute. The predetermined attribute is identified by a semantic analysis in a text including character strings obtained by speech recognition. The present technology is applicable to an agent apparatus of a user interaction type, for example.

## Description

### Technical Field

The present technology relates to an information processor, an information processing method, and a program, and particularly to an information processor, an information processing method, and a program that allow a user to obtain a speech recognition result that the user expects.

### Background Art

There have been known various technologies related to speech recognition. Among those technologies, PTL 1, for example, discloses an apparatus that causes a talker to confirm whether or not a speech recognition result is correct or incorrect and that stores a portion having an error.

In recent years, there has also been a technology that utilizes a large-vocabulary speech recognition engine to give an instruction to an electronic apparatus or the like, in accordance with user's spoken voice.

### Citation List

### Patent Literature

PTL 1: Japanese Unexamined Patent Application Publication No. 2002-297189

### Summary of the Invention

### Problems to be Solved by the Invention

In a speech recognition engine as described above, however, uncommon proper nouns or words known only to a user who has spoken are not registered in a dictionary. Consequently, in some cases, the user is not able to obtain a speech recognition result that the user expects.

For example, in a case where an electronic apparatus is instructed to transmit an e-mail to a specific destination in accordance with spoken voice, the destination is not correctly inputted because the name of a person who is the destination is not registered in the dictionary.

The present technology has been made in light of such circumstances and is to allow the user to obtain the speech recognition result that the user expects.

### Means for Solving the Problems

An information processor of the present technology includes a search unit that retrieves a second word that is a candidate for replacement of a first word with a predetermined attribute. The predetermined attribute is identified by a semantic analysis in a text including character strings obtained by speech recognition.

An information processing method of the present technology includes retrieving a second word that is a candidate for replacement of a first word with a predetermined attribute by an information processor. The predetermined attribute is identified by a semantic analysis in a text including character strings obtained by speech recognition.

A program of the present technology causes a computer to execute processing of retrieving second word that is a candidate for replacement of a first word with a predetermined attribute. The predetermined attribute is identified by a semantic analysis in a text including character strings obtained by speech recognition.

In the present technology, the second word that is the candidate for replacement of the first word with the predetermined attribute is retrieved. The predetermined attribute is identified by the semantic analysis in the text including the character strings obtained by the speech recognition.

### Effect of the Invention

According to the present technology, a user is able to obtain a speech recognition result that the user expects.

It is to be noted that the effects described here are not necessarily limiting, and any effect described in the present disclosure may be provided.

### Brief Description of Drawings

[FIG. 1] FIG. 1 is a diagram explaining about an overview of speech recognition of the present technology.
[FIG. 2] FIG. 2 is a diagram explaining about the overview of the speech recognition of the present technology.
[FIG. 3] FIG. 3 is a diagram explaining about the overview of the speech recognition of the present technology.
[FIG. 4] FIG. 4 is a diagram explaining about the overview of the speech recognition of the present technology.
[FIG. 5] FIG. 5 is a block diagram illustrating a hardware configuration example of an electronic apparatus to which the present technology is applied.
[FIG. 6] FIG. 6 is a block diagram illustrating a functional configuration example of the electronic apparatus.
[FIG. 7] FIG. 7 is a flowchart explaining about speech recognition result modification processing.
[FIG. 8] FIG. 8 is a diagram illustrating a display example of a speech recognition result.
[FIG. 9] FIG. 9 is a diagram illustrating a display example of the speech recognition result.
[FIG. 10] FIG. 10 is a diagram illustrating a display example of speech recognition result.
[FIG. 11] FIG. 11 is a diagram illustrating a display example of the speech recognition result.
[FIG. 12] FIG. 12 is a flowchart explaining about the speech recognition result modification processing.
[FIG. 13] FIG. 13 is a diagram explaining about retrieving of a candidate for replacement based on voice data.
[FIG. 14] FIG. 14 is a diagram illustrating a display example of a speech recognition result.
[FIG. 15] FIG. 15 is a diagram illustrating a display example of the speech recognition result.
[FIG. 16] FIG. 16 is a diagram illustrating an example of a search range corresponding to intent.
[FIG. 17] FIG. 17 is a diagram explaining about a specific example of the search range.
[FIG. 18] FIG. 18 is a diagram illustrating an example of a search range corresponding to surrounding situations of the user.
[FIG. 19] FIG. 19 is a diagram explaining about a specific example of the search range.
[FIG. 20] FIG. 20 is a block diagram illustrating a functional configuration example of a server to which the present technology is applied.
[FIG. 21] FIG. 21 is a block diagram illustrating a configuration example of a computer.

### Modes for Carrying Out the Invention

In the following, description is given of embodiments for carrying out the present disclosure (hereinafter referred to as embodiments). It is to be noted that description is given in the following order.

1. Overview of Speech Recognition of Present Technology
2. First Embodiment (An example of modifying a speech recognition result on the basis of respeaking of a user)
3. Second Embodiment (An example of automatically modifying the speech recognition result)
4. Examples of Retrieving of Candidate for Replacement
5. Third Embodiment (Application to Server)
6. Others

### <1. Overview of Speech Recognition of Present Technology>

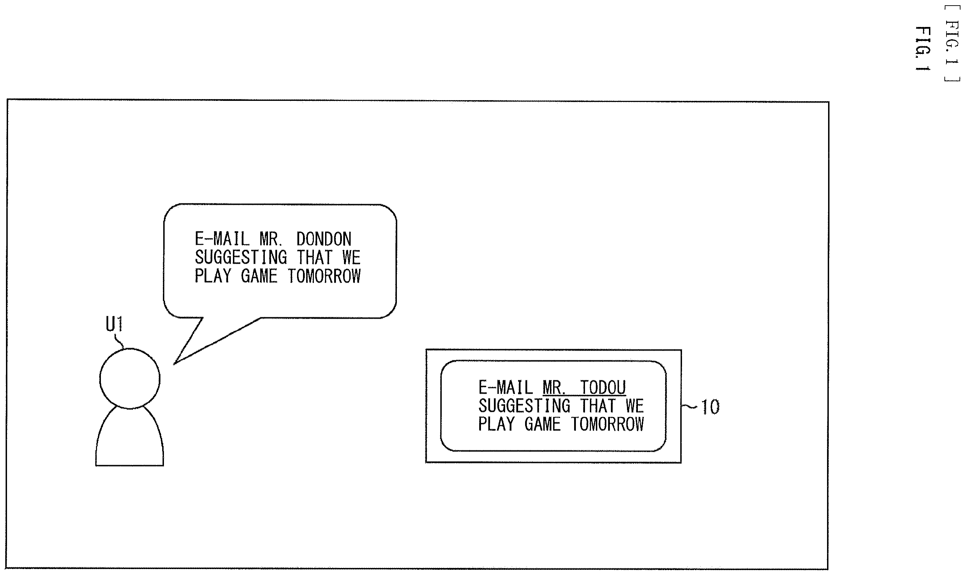

First, description is given of an overview of speech recognition of the present technology with reference to FIG. 1 to FIG. 4.

FIG. 1 illustrates a user U1 and an electronic apparatus 10 that performs speech recognition on speech of the user U1 and to which the present technology is applied.

In an example of FIG. 1, the user U1 instructs the electronic apparatus 10 to transmit a message to Mr. DonDon through the use of an e-mail, by saying "E-mail Mr. DonDon suggesting that we play a game tomorrow".

The electronic apparatus 10 performs the speech recognition on the speech of the user U1 by utilizing a large-vocabulary speech recognition engine. However, "Mr. DonDon", who is a destination, is not registered in a dictionary and incorrectly recognized as "Mr. Todou", as illustrated in FIG. 1.

Then, the electronic apparatus 10 performs a semantic analysis of a text including character strings obtained by the speech recognition to identify "Mr. Todou" being the "destination", "we play a game tomorrow" being "contents", and transmission of the message through the use of the e-mail being "intent".

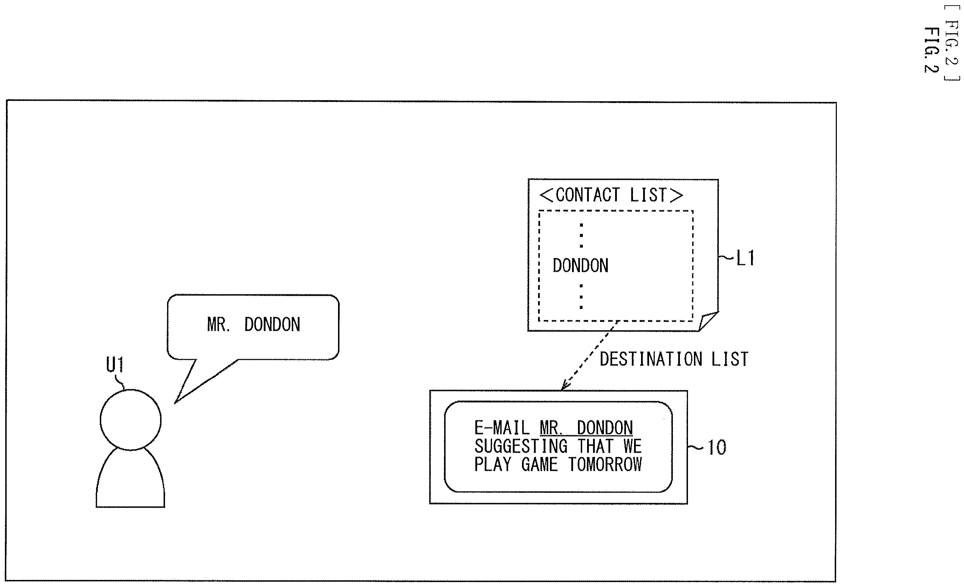

On the basis of the attribute (hereinafter referred to as a slot) of the "destination", the electronic apparatus 10 acquires, as the dictionary, a destination list which includes possible destinations, from an internally retained contact list (telephone directory) L1, as illustrated in FIG. 2, and starts a command-type speech recognition engine.

When the user U1 says "Mr. DonDon" again in this state, as illustrated in FIG. 2, the electronic apparatus 10 correctly recognizes "Mr. DonDon" included in the contact list L1 (destination list) and replaces "Mr. Todou" in the character strings obtained by the speech recognition.

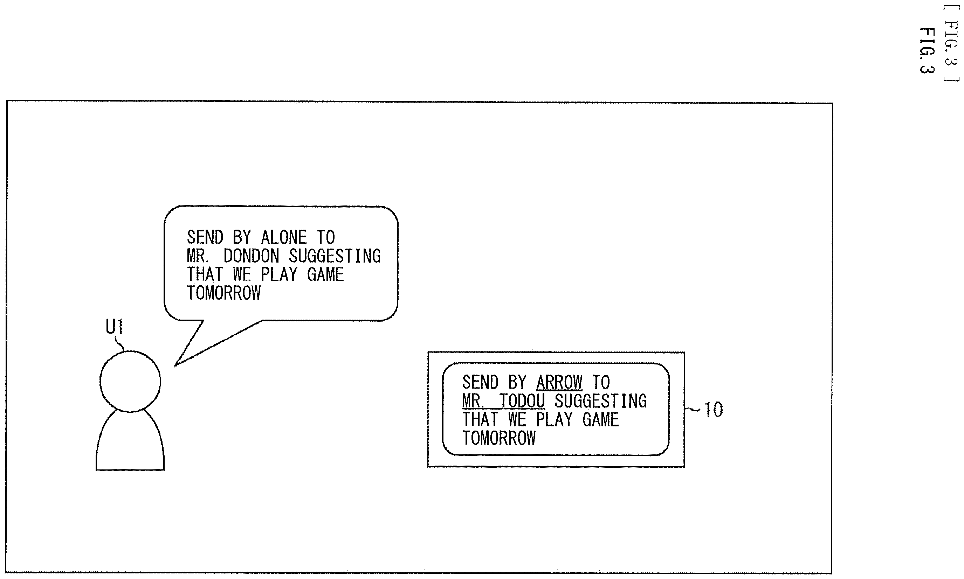

In addition, in an example of FIG. 3, the user U1 instructs the electronic apparatus 10 to transmit a message to "Mr. DonDon" through the use of application (hereinafter referred to as app) "Alone" by saying "Send by Alone to Mr. DonDon suggesting that we play a game tomorrow". "Alone" is the application that is a means to transmit a message.

The electronic apparatus 10 performs the speech recognition on the speech of the user U1 by utilizing the large-vocabulary speech recognition engine. However, "Mr. DonDon", which is the destination, is not registered in the dictionary and incorrectly recognized as "Mr. Todou", as illustrated in FIG. 3. In addition, "Alone", which is the means to transmit a message, is not registered in the dictionary, either, and incorrectly recognized as "Arrow", as illustrated in FIG. 3.

Then, the electronic apparatus 10 performs a sematic analysis of the text including character strings obtained by the speech recognition to identify respective elements of "Mr. Todou " being the "destination", "we play a game tomorrow" being the "contents", "Arrow" being the "means to transmit a message", and the transmission of the message being the "intent".

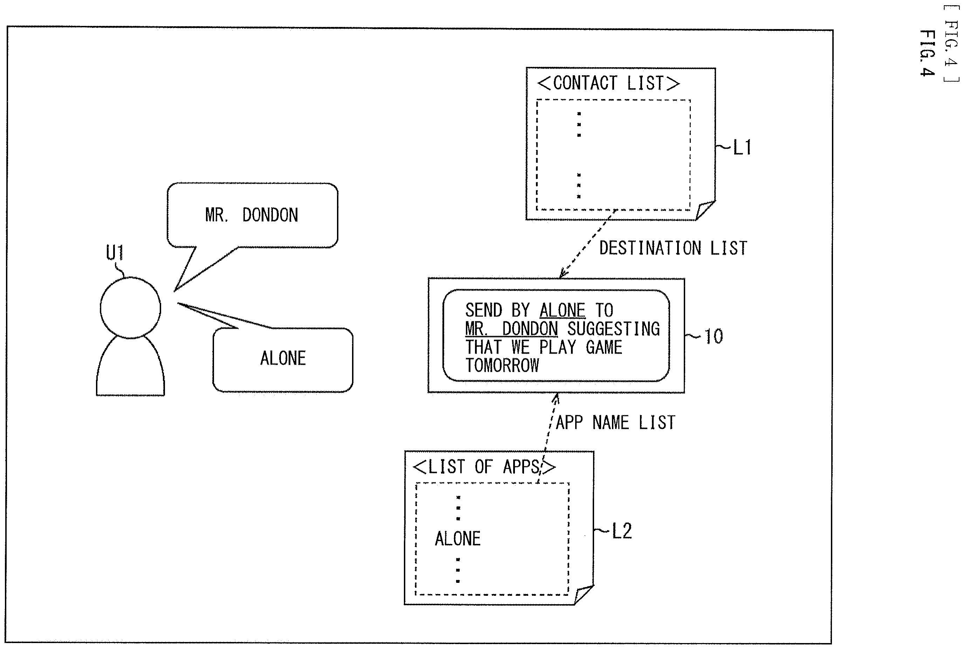

On the basis of the slot of the "destination", the electronic apparatus 10 acquires, as the dictionary, the destination list which includes possible destinations, from the internally retained contact list L1, as illustrated in FIG. 4, and starts the command-type speech recognition engine. In addition, on the basis of the slot of the "means to transmit amessage", the electronic apparatus 10 acquires, as the dictionary, an app name list of applications which are possible means to transmit a message, from an internally retained list of installed apps L2, as illustrated in FIG. 4, and starts the command-type speech recognition engine.

When the user U1 says "Mr. DonDon" again in this state as illustrated in FIG. 4, the electronic apparatus 10 correctly recognizes "Mr. DonDon" included in the contact list L1 (destination list) and replaces "Mr. Todou" in the character strings obtained by the speech recognition. Furthermore, when the user U1 says "Alone" again, the electronic apparatus 10 correctly recognizes "Alone" included in the contact list L2 (app name list) and replaces "Arrow" in the character strings obtained by the speech recognition.

As described above, the electronic apparatus 10 correctly modifies the speech recognition result.

### <2. First Embodiment>

### (Configuration Example of Electronic Apparatus)

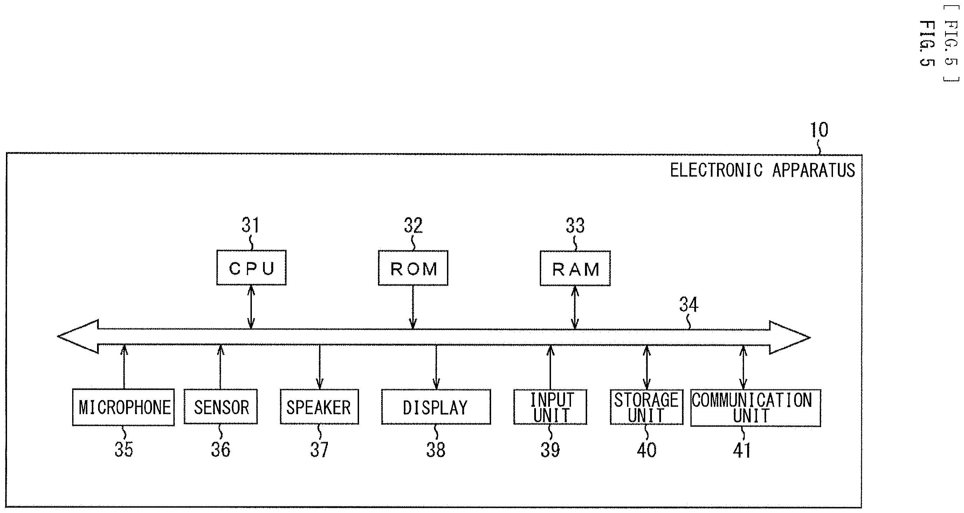

FIG. 5 is a block diagram illustrating a hardware configuration example of the electronic apparatus 10 of a first embodiment to which the present technology is applied. The electronic apparatus 10 is configured as an agent apparatus of a user interaction type, for example.

A central processing unit (CPU) 31, a read only memory (ROM) 32, and a random access memory (RAM) 33 are mutually connected by a bus 34.

To the bus 34 are connected a microphone 35, a sensor 36, a speaker 37, a display 38, an input unit 38, a storage unit 40, and a communications unit 41.

The microphone 35 detects spoken voice of a user.

The sensor 36 includes various types of sensors such as a camera, an acceleration sensor, a gyro sensor, or a positioning sensor. For example, the sensor 36 outputs an image obtained by shooting. In addition, the sensor 36 outputs information indicating a detection result such as acceleration, an angular speed, or a current position.

The speaker 37 outputs voice (synthesized voice).

The display 38 includes a liquid crystal display (LCD), an organic electro luminescence (EL) display, or the like. The display 38 displays the character strings obtained by the speech recognition as the speech recognition result.

The input unit 39 includes a touch panel provided on the display 38 in a stacked manner or various types of buttons provided on a housing of the electronic apparatus 10. The input unit 39 detects an operation by the user and outputs information indicating contents of the operation.

The storage unit 40 includes a nonvolatile memory or the like. The storage unit 40 stores various types of data, such as data for voice synthesis, the aforementioned contact list or list of installed apps, or the like, in addition to a program executed by the CPU 31.

The communications unit 41 includes a network interface or the like. The communications unit 41 performs wired or wireless communications with an external apparatus.

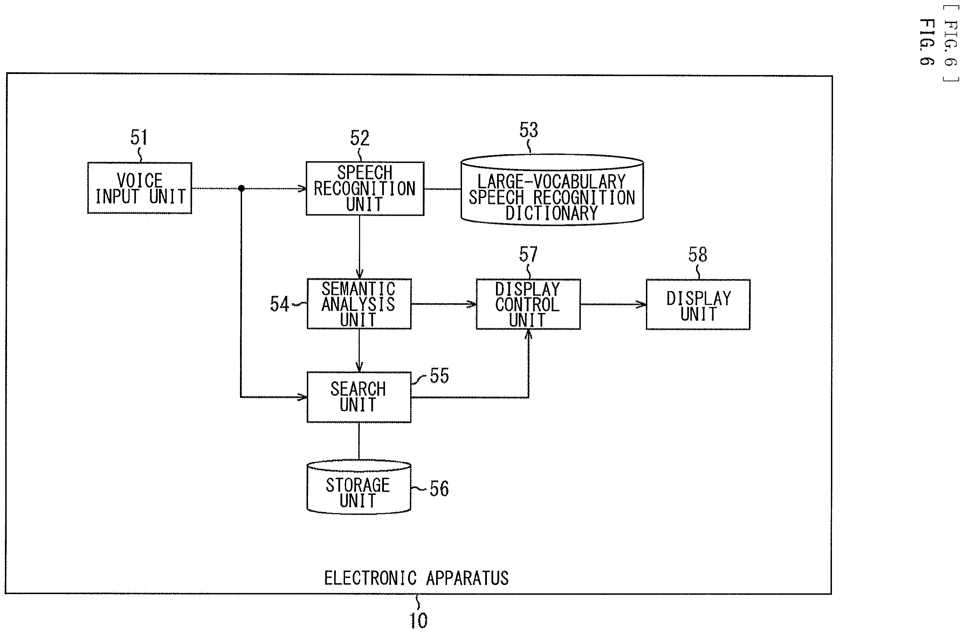

FIG. 6 is a block diagram illustrating a functional configuration example of the electronic apparatus 10.

At least some of function blocks of the electronic apparatus 10 illustrated in FIG. 6 are implemented by the CPU 31 of FIG. 5 executing a predetermined program.

The electronic apparatus 10 includes a voice input unit 51, a speech recognition unit 52, a large-vocabulary speech recognition dictionary 53, a semantic analysis unit 54, a search unit 55, a storage unit 56, a display control unit 57, and a display unit 58.

The voice input unit 51 corresponds to the microphone 35 of FIG. 5 and inputs user's spoken voice. The voice input unit 51 supplies the speech recognition unit 52 with voice data corresponding to the inputted user's spoken voice.

The speech recognition unit 52 performs large-vocabulary speech recognition on the voice data received from the voice input unit 51 through the use of the large-vocabulary speech recognition engine.

The large-vocabulary speech recognition dictionary 53 is a dictionary in which vocabulary corresponding to extensive spoken contents has been registered in advance. The speech recognition unit 52 is able to perform the speech recognition by matching the voice data from the voice input unit 51 against the vocabulary (words) registered in the large-vocabulary speech recognition dictionary 53. The character strings obtained by the speech recognition are supplied to the semantic analysis unit 54.

The semantic analysis unit 54 identifies a predetermined slot (attribute) included in a text by performing natural language processing, specifically, the semantic analysis, on the text including the character strings received from the speech recognition unit 52. The slot is an attribute of a morpheme in which uncommon proper nouns in a text or highly personal words are used, for instance. The slot may be a "location", a "call partner", or the like, in addition to the aforementioned "destination".

The search unit 55 retrieves a candidate for replacement (second word) of a word (first word) corresponding to the slot identified by the semantic analysis of the semantic analysis unit 54 in the text including the character strings obtained by the speech recognition.

Specifically, the search unit 55 creates a local speech recognition dictionary in data stored in the storage unit 56 on the basis of a search range corresponding to the identified slot and starts a local speech recognition engine that performs command recognition or fixed phrasing recognition.

The storage unit 56 corresponds to the storage unit 40 of FIG. 5 and stores, for example, the aforementioned contact list or list of installed apps.

Therefore, in a case where the "destination" is identified as the slot, for example, the search unit 55 creates the destination list as the local speech recognition dictionary on the basis of the contact list stored in the storage unit 56 and starts the local speech recognition engine corresponding to the identified slot.

Then, the search unit 55 retrieves a word which is a candidate for replacement, by using the local speech recognition engine on the basis of respeaking of the user about the identified slot and replaces the word corresponding to the identified slot with the retrieved word.

The display control unit 57 controls display on the display unit 58 corresponding to the display 38 of FIG. 5. Specifically, the display control unit 57 causes the display unit 58 to display the text on which the semantic analysis unit 54 has performed the semantic analysis or causes the display unit 58 to display the text in which the word corresponding to the identified slot has been replaced by the search unit 55.

### (Flow of Speech recognition Result Modification Processing)

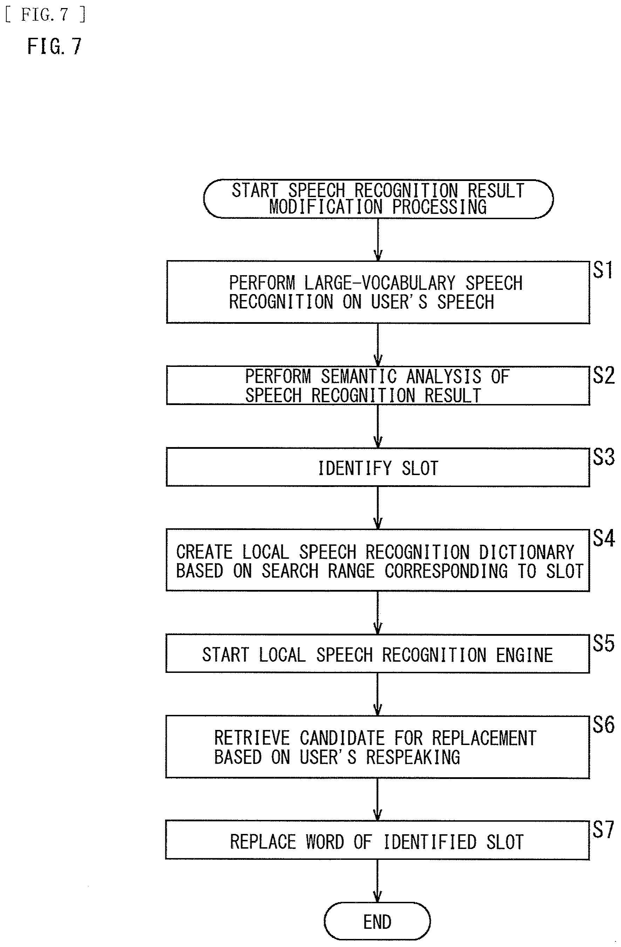

In the following, the flow of speech recognition result modification processing by the electronic apparatus 10 is described with reference to a flowchart of FIG. 7. The processing of FIG. 7 starts when the user's spoken voice is inputted to the voice input unit 51.

In step S1, the speech recognition unit 52 performs the large-vocabulary speech recognition on a user's spoken voice (voice data received from the voice input unit 51) through the use of the large-vocabulary speech recognition engine.

In step S2, the semantic analysis unit 54 performs the semantic analysis of the text including the character strings obtained by the speech recognition performed by the speech recognition unit 52.

In step S3, the semantic analysis unit 54 identifies a slot (for example, "destination") on the basis of a result of the semantic analysis.

In step S4, the search unit 55 creates the local speech recognition dictionary on the basis of the search range corresponding to the identified slot, in the data stored in the storage unit 56.

In step S5, the search unit 55 starts the local speech recognition engine.

Here, suppose that the user says the word corresponding to the identified slot again.

In step S6, the search unit 55 retrieves the word that is a candidate for replacement by using the local speech recognition engine on the basis of the respeaking of the user about the identified slot.

In step S7, the search unit 55 replaces the word corresponding to the identified slot with the retrieved word.

With the aforementioned processing, even in a case where uncommon proper nouns or words known only to a user who has spoken are not registered in the dictionary, the user is able to obtain the speech recognition result that the user expects. As a result, for example, even in a case where the electronic apparatus 10 is instructed to transmit an e-mail to a specific destination by a spoken voice, a correct destination is able to be inputted.

Here, description is given of display examples of the speech recognition result of the display unit 58 by the display control unit 57 in the aforementioned speech recognition result modification processing.

### (Display Example 1 of Speech Recognition Result)

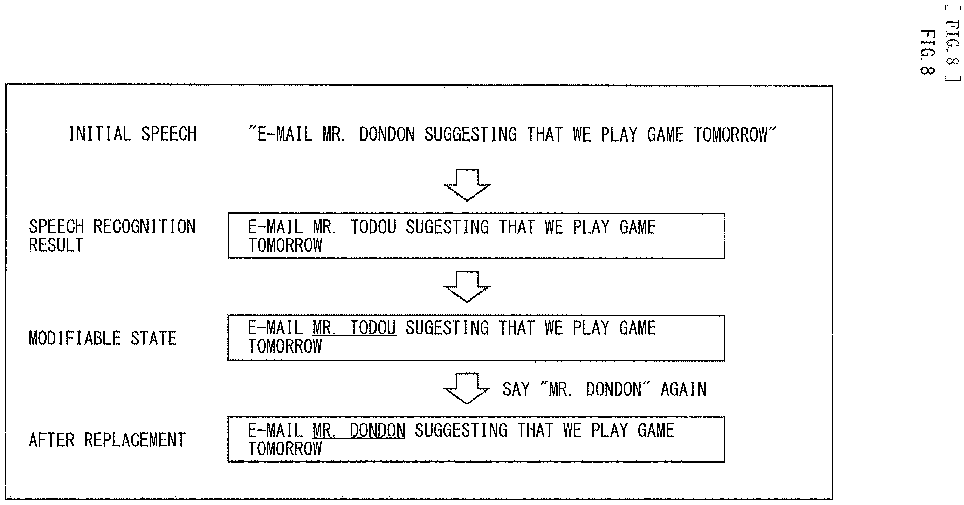

FIG. 8 is a diagram illustrating a first display example of the speech recognition result.

As illustrated on the first row, in a case where the spoken voice of "E-mail Mr. DonDon suggesting that we play a game tomorrow" has been inputted as user's initial speech, a (large-vocabulary) speech recognition result is displayed, as illustrated on the second row. In the speech recognition result, "Mr. DonDon" who is the destination in the text of the initial speech is incorrectly recognized as "Mr. Todou".

When the semantic analysis of the text including the character strings obtained by the speech recognition is performed and the local speech recognition engine corresponding to the "destination", which is the identified slot, is started, display of the speech recognition result enters a modifiable state as illustrated on the third row. Specifically, "Mr. Todou", which corresponds to the identified slot "destination" included in the text of the speech recognition result, is highlighted. In an example of FIG. 8, although the word ("Mr. Todou") corresponding to the identified slot is underlined, highlighting is not limited to this, and a letter font, a color, a size, or a background color of the word may be changed, or the like.

This modifiable state continues for a predetermined period of time such as 5 seconds, for example.

Then, when the user says "Mr. DonDon" again while the display of the speech recognition result is in the modifiable state, "Mr. DonDon" included in the contact list is retrieved by the local speech recognition. As a result, the text in which "Mr. Todou" in the speech recognition result has been replaced by "Mr. DonDon" is displayed, as illustrated on the fourth row.

In this manner, the user is able to easily modify the speech recognition result by respeaking.

### (Display Example 2 of Speech Recognition Result)

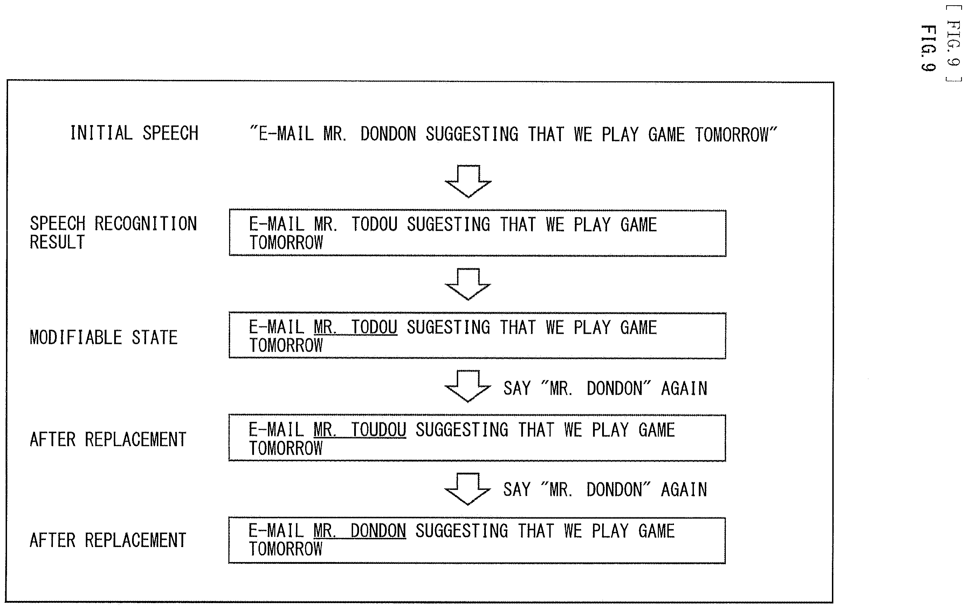

FIG. 9 is a diagram illustrating a second display example of the speech recognition result.

The states from the first row to the third rows in FIG. 9 are similar to the states in FIG. 8, and thus description thereof is omitted.

When the user says "Mr. DonDon" again in the modifiable state on the third row, "Mr. Toudou" included in the contact list is retrieved by the local speech recognition. As a result, the text is displayed in which "Mr. Todou" in the speech recognition result has been replaced by "Mr. Toudou", as illustrated on the fourth row.

However, it is "Mr. DonDon" and not "Mr. Toudou" that the user has said again. As such, in a case where a similar name is included in the contact list, a modification result that the user desires may not be obtained in single respeaking.

Thus, the user says "Mr. DonDon" further again in the state on the fourth row, and "Mr. DonDon" included in the contact list is retrieved by the local speech recognition. As a result, the text is displayed in which "Mr. Todou" in the speech recognition result has been replaced by "Mr. DonDon", as illustrated on a fifth row.

As described above, in a case where a plurality of candidates for replacement of the word corresponding to the identified slot is included in the search range corresponding to the slot, the candidates for replacement are switched one by one in the text by the user repeatedly respeaking. This makes it possible to narrow down the candidates for replacement and to reliably obtain the modification result that the user desires.

### (Display Example 3 of Speech recognition Result)

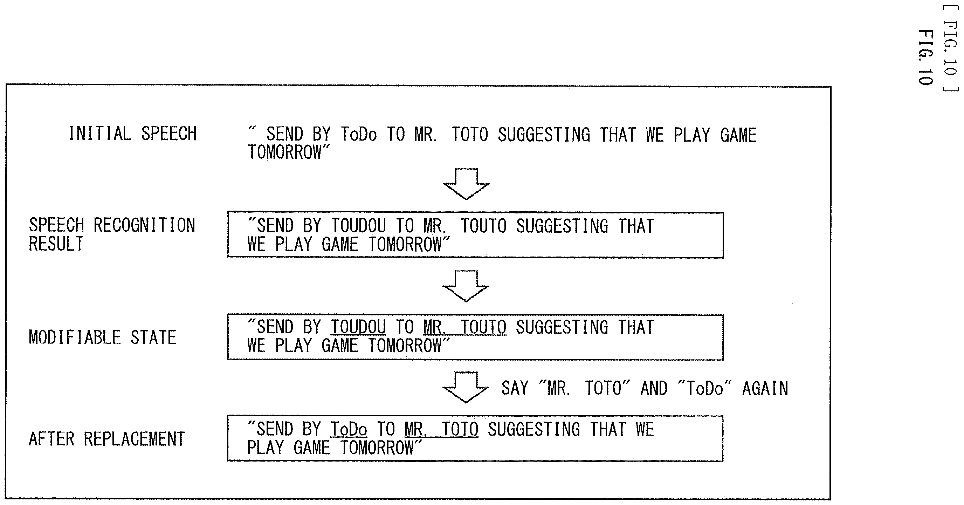

FIG. 10 is a diagram illustrating a third display example of the speech recognition result.

As illustrated on the first row, in a case where the spoken voice of "Send by ToDo to Mr. ToTo suggesting that we play a game tomorrow" has been inputted as the user's initial speech, the (large-vocabulary) speech recognition result is displayed, as illustrated on the second row. In the speech recognition result, "Mr. DonDon" that is the destination contained in the text of the initial speech, and "ToDo" that is the means to transmit a message, are incorrectly recognized as "Mr. Touto" and "Toudou", respectively. It is to be noted here that "ToDo" is an app that is the means to transmit a message.

When the semantic analysis of the text including the character strings obtained by the speech recognition is performed and the local speech recognition engines respectively corresponding to the identified slots, i.e., the "destination" and the "means to transmit a message" are started, the display of the speech recognition result enters the modifiable state, as illustrated on the third row. Specifically, "Mr. Touto" corresponding to the identified slot "destination" and "Toudou" corresponding to the slot "means to transmit a message", which are included in the text of the speech recognition result, are highlighted. Although the words corresponding to the identified slots are underlined also in an example of FIG. 10, highlighting is not limited thereto and the letter font, the color, the size, or the background color of the words may be changed, for example.

Then, the user says "Mr. DonDon" and "ToDo" again in the modifiable state, and "Mr. DonDon" included in the contact list and "ToDo" included in the list of installed apps are retrieved by the local speech recognition for each of the slots. As a result, the text is displayed in which "Mr. Touto" and "Toudou" in the speech recognition result have been respectively replaced by "Mr. DonDon" and "ToDo", as illustrated on the fourth row.

At this time, the speech recognition engine corresponding to the "destination" identifies a position of the word replaced by "Mr. DonDon", and the speech recognition engine corresponding to the "means to transmit a message" identifies a position of the word replaced by "ToDo".

In this manner, even in a case where the similar words are present in the plurality of slots, the candidates for replacement are appropriately retrieved from search ranges corresponding to the respective slots. This allows the user to modify the speech recognition result without performing a focus transition operation or the like, to select which word is to be modified.

### (Display Example 4 of Speech Recognition Result)

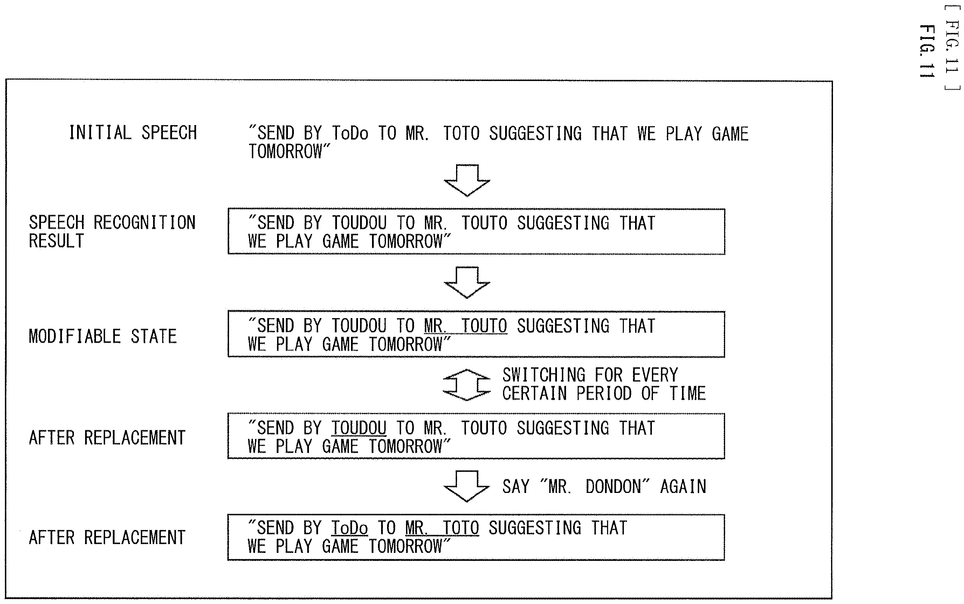

FIG. 11 is a diagram illustrating a fourth display example of the speech recognition result.

The states from the first row to the second row in FIG. 11 are similar to the states in FIG. 10 and thus description thereof is omitted.

In the example of FIG. 10, the two slots "destination" and "means to transmit a message" are identified, and the words corresponding to the two slots included in the text of the speech recognition result are respectively highlighted.

In the modifiable state of an example of FIG. 11 in which the two slots have been identified, the highlighted states of the words corresponding to the respective slots are switched for every certain period of time, as illustrated on the third row and the fourth row.

Specifically, switching is performed between the state in which "Mr. Touto" corresponding to the slot "destination" included in the text of the speech recognition result is highlighted and the state in which "Toudou" corresponding to the slot "means to transmit a message" is highlighted.

Even in this case, the user says "Mr. DonDon" or "ToDo" again in the respective modifiable states, "Mr. DonDon" included in the contact list and "ToDo" included in the list of installed apps are retrieved by the local speech recognition for each of the slots. As a result, the text is displayed in which "Mr. Touto" and "Toudou" in the speech recognition result have been respectively replaced by "Mr. DonDon" and "ToDo", as illustrated on the fifth row.

It is to be noted that in the aforementioned display examples, the candidates for replacement of the words corresponding to the identified slots may be displayed before respeaking of the user. In this case, it is necessary to retrieve the candidates for replacement corresponding to the identified slots independent of the respeaking of the user. This may be implemented by processing of the embodiment to be described below.

In addition, although all of the contents of the user's speech (texts on which the semantic analysis has been performed) is displayed in the aforementioned display examples, some of elements identified by the semantic analysis may be displayed.

For example, in a case where the user instructs the transmission of the message through the use of the e-mail, the character strings (including e-mail address information) corresponding to the "destination" are displayed in a destination (To) column on a screen for creating a new e-mail displayed on the display unit 58. In addition, the character strings corresponding to the "contents" are displayed in a text column on the screen for creating a new e-mail.

### <3. Second Embodiment>

In the above, although description has been given of the examples in which the speech recognition result is modified on the basis of the respeaking of the user, automatic modification of the speech recognition result is also made possible independent of the respeaking of the user.

### (Flow of Speech Recognition Result Modification Processing)

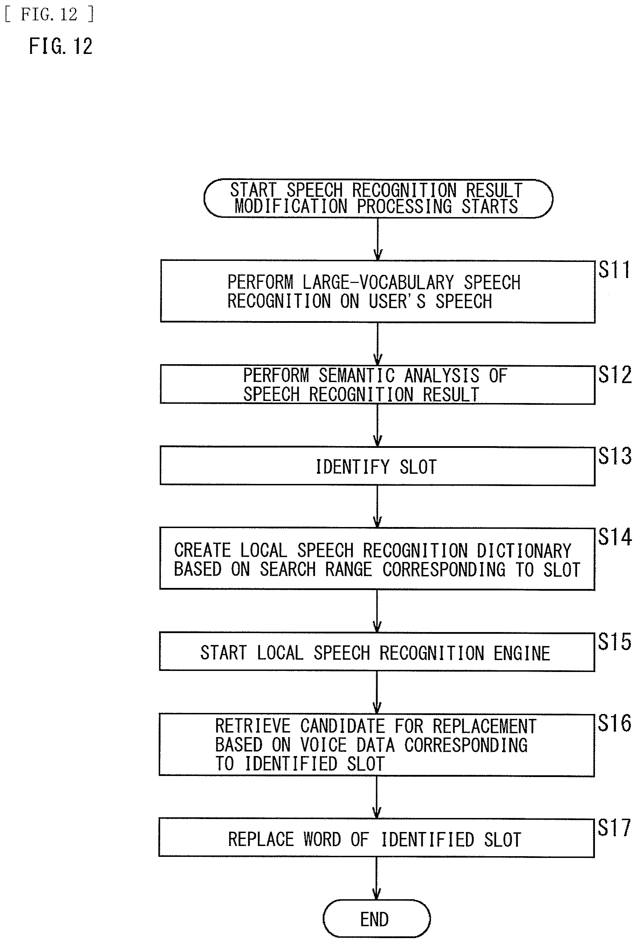

FIG. 12 is a flowchart explaining about the speech recognition result modification processing by the electronic apparatus 10 in the present embodiment.

It is to be noted that processing in steps from S11 to S15 in FIG. 12 are similar to the processing in steps from S1 to S5 in FIG. 7, and thus description thereof is omitted.

After step S15, the processing proceeds to step S16 where the search unit 55 retrieves the word that is the candidate for replacement, through the use of the local speech recognition engine, on the basis of the voice data of the word corresponding to the identified slot. The identified slot is included in the text on which the semantic analysis has been performed.

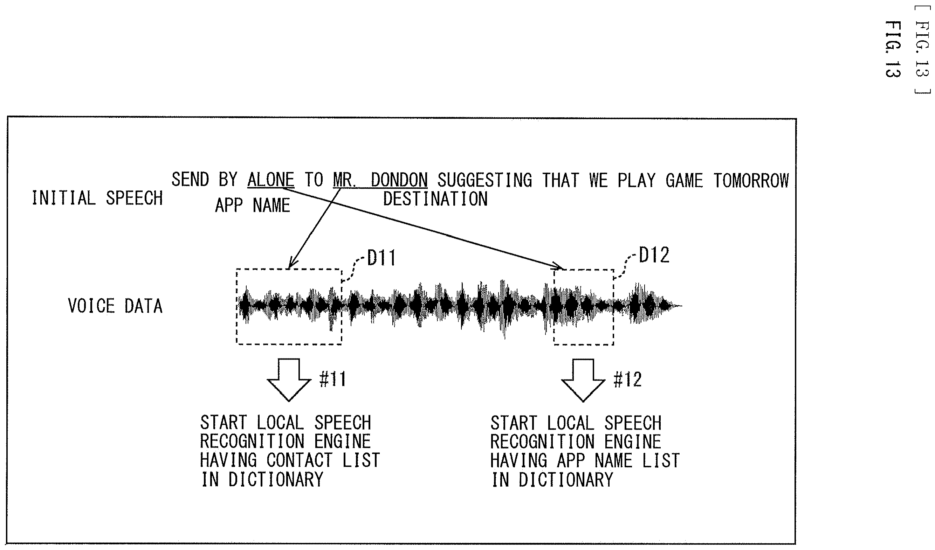

For example, as illustrated on the first row of FIG. 13, in a case where the spoken voice of "Send by Alone to Mr. DonDon suggesting that we play a game tomorrow" has been inputted as the user's initial speech, the "destination" and the "means to transmit a message" (app name) are identified as the slots by the semantic analysis.

The search unit 55 acquires the voice data of the user's initial speech and estimates, in the voice data, portions corresponding to the "destination" and the app name in the text on which the sematic analysis has been performed, on the basis of time of the entire speech and a length of the word corresponding to the slot.

When estimating data D11 corresponding to the "destination" in the voice data, the search unit 55 retrieves a word that is the candidate for replacement of the data D11, by starting the local speech recognition engine having the destination list in the dictionary, as illustrated in an arrow #11. Similarly, when estimating data D12 corresponding to the app name in the voice data, the search unit 55 retrieves a word that is the candidate for replacement of the data D12, by starting the local speech recognition engine having the app name list in the dictionary, as illustrated by an arrow #12.

In this manner, the word that is the candidate for replacement is retrieved on the basis of the voice data.

Turning back to the flowchart of FIG. 12, the search unit 55 replaces the word corresponding to the identified slot with the retrieved word in step S17.

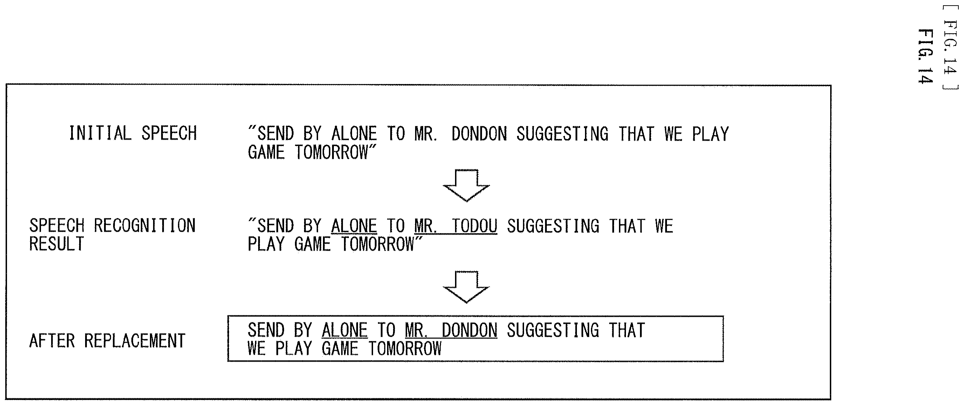

FIG. 14 is a diagram illustrating a display example of the speech recognition result in the aforementioned speech recognition result modification processing.

As illustrated on the first row, in a case where the spoken voice of "Send by Alone to Mr. DonDon suggesting that we play a game tomorrow" has been inputted as the user's initial speech, the (large-vocabulary) speech recognition result is obtained, as illustrated on the second row. In the speech recognition result, "Mr. DonDon" who is the destination in the text of the initial speech and "Alone" which is the means to transmit a message are incorrectly recognized as "Mr. Touto" and "Arrow", respectively. It is to be noted that here, the speech recognition result is not displayed on the display unit 58.

When the semantic analysis of the text including the characteristic strings obtained by the speech recognition is performed and the local speech recognition engines corresponding to the "destination" and the "means to transmit a message" which are each the identified slot are started, the search unit 55 retrieves words that are the candidates for replacement of the words (voice data) corresponding to the respective slots.

As a result, the text is displayed in which "Mr. Todou" and "Arrow" in the speech recognition result have been respectively replaced by "Mr. DonDon" and "Alone", as illustrated on the third row.

The processing described above allows the user to obtain the speech recognition result that the user expects, without the need for respeaking of the user.

It is to be noted that there is a possibility that although the word corresponding to the identified slot has been correctly speech-recognized, an incorrect speech recognition result may be obtained because the word is automatically replaced.

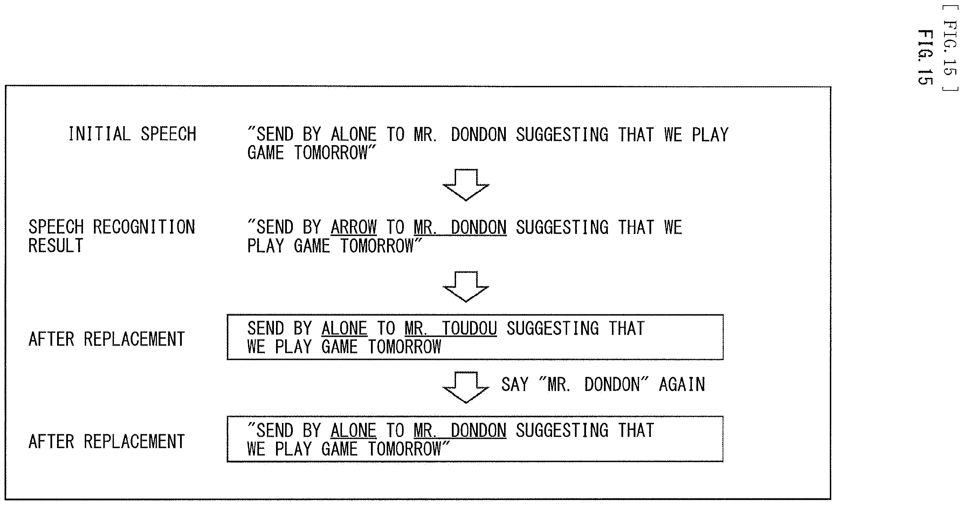

In such a case, as described with reference to FIG. 15, the word replaced in the displayed text may be modified on the basis of respeaking of the user.

Specifically, in a case where the spoken voice of "Send by Alone to Mr. DonDon suggesting that we play a game tomorrow" is inputted as the user's initial speech as illustrated in the first row of FIG. 15, the (large-vocabulary) speech recognition result is obtained as illustrated on the second row. In the speech recognition result, "Mr. DonDon ", which is the destination in the text of the initial speech, is correctly recognized, and "Alone", which is the means to transmit a message, is incorrectly recognized as "Arrow".

When the semantic analysis of the text including the character strings obtained by the speech recognition is performed and the local speech recognition engines corresponding to the "destination" and the "means to transmit a message", which are the identified slots, are started, the search unit 55 retrieves words that are the candidates for replacement of the words (voice data) corresponding to the respective slots.

As a result, the text is displayed in which "Mr. DonDon" and "Arrow" in the speech recognition result have been respectively replaced by "Mr. Toudou" and "Alone", as illustrated on the third row. However, "Mr. DonDon" that is the "destination" having been correctly recognized is incorrectly replaced by "Mr. Toudou".

When the user saying "Mr. DonDon" again in this state, "Mr. DonDon" included in the contact list is retrieved by the local speech recognition. As a result, the text is displayed in which "Mr. Toudou" in the speech recognition result has been replaced by "Mr. DonDon", as illustrated on the fourth row.

As described above, in the configuration in which the speech recognition result is automatically modified, it becomes possible to consequently obtain the speech recognition result that the user expects, by allowing the user to further modify the modification result, in a case where an incorrect modification is made.

It is to be noted that a frequency (accuracy rate of modification results) of further modifications (searching) by the user may also be learned for each identified slot. In this case, it is possible to determine, for each of the slots and on the basis of a result of the learning, whether to perform the processing of automatically modifying the speech recognition result (FIG. 12) or to perform the processing of modifying the speech recognition result on the basis of the respeaking of the user (FIG. 7). For example, in a case where the accuracy rate of the modification result of the automatic speech recognition result on the "destination" is lower than a predetermined value, the processing of modifying the speech recognition result based on the respeaking of the user is performed on the "destination". In addition, the accuracy rate of the modification result of the automatic speech recognition result on the "means to transmit a message" is higher than the predetermined value, the processing of automatically modifying the speech recognition result is performed on the "means to transmit a message".

It is to be noted that in the display example of the speech recognition result in the aforementioned embodiment, the word corresponding to the identified slot may be highlighted in accordance with a degree of confidence of the speech recognition result of the word. For example, it is believed that as the degree of confidence of the speech recognition result becomes lower, necessity of modification becomes higher. Hence, the word is highlighted in a case where the degree of confidence of the speech recognition result for the word corresponding to the identified slot is lower than the predetermined value.

Furthermore, in the display examples of the speech recognition result in the aforementioned embodiments, in a case where the user specifies the word corresponding to the identified slot in the text displayed as the modification result of the speech recognition result, the word that is the candidate for replacement may be retrieved. This allows the user to correctly modify only words that have been incorrectly recognized or modified.

### <4. Example of Search Range of Candidate for Replacement>

In the aforementioned embodiments, the search range of the candidate for replacement of the word corresponding to the identified slot is the search range corresponding to that slot (attribute).

However, even in the same slot, a search range thereof differs, depending on intent of contents of the user's speech (text on which the semantic analysis has been performed).

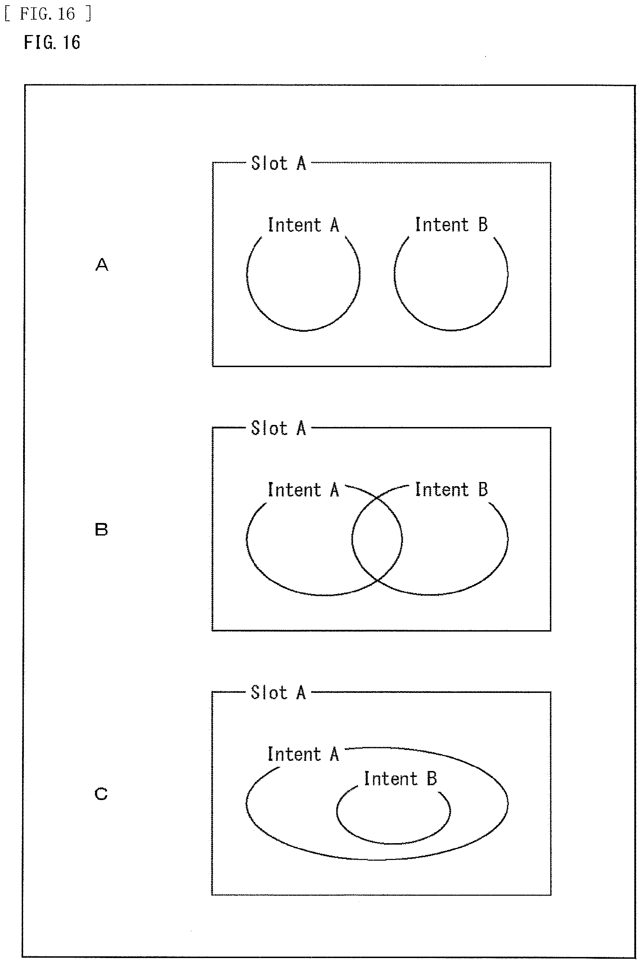

FIG. 16 is a diagram illustrating an example of a search range corresponding to an intent.

In any of three examples illustrated in FIG. 16, a candidate for replacement corresponding to an intent A and a candidate for replacement corresponding to an intent B are included in a search range corresponding to Slot A.

In A of FIG. 16, the example is illustrated in which the candidate for replacement corresponding to the intent A and the candidate for replacement corresponding to the intent B have no mutually common element.

In B of FIG. 16, the example is illustrated in which the candidate for replacement corresponding to the intent A and the candidate for replacement corresponding to the intent B have a mutually common element in some portions thereof.

In C of FIG. 16, the example is illustrated in which the candidate for replacement corresponding to the intent A includes all elements of the candidate for replacement corresponding to the intent B.

That is, the search unit 55 retrieves the candidate for replacement of the word corresponding to the slot, from the search range corresponding to that slot and the intent of the text on which the semantic analysis has been performed.

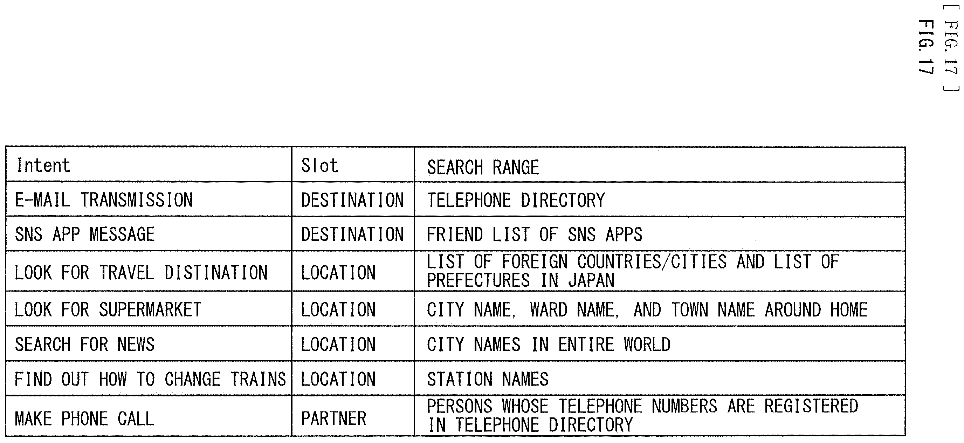

FIG. 17 is a diagram explaining about a specific example of a search range corresponding to the intent.

In a case where the intent of the contents of the user's speech is "e-mail transmission" and the slot is the "destination", the search range of words corresponding to the "destination" is the telephone directory. In a case where the intent of the contents of the user's speech is "transmission of an SNS (Social Networking Service) app message" and the slot is the "destination", the search range of words corresponding to the "destination" is a friend list of the SNS app.

As such, even in a case where the slot is the "destination", the search range thereof differs depending on the intent of the contents of the user's speech.

Here, a word corresponding to another slot may be identified on the basis of a search result of a word corresponding to one slot. Specifically, a personal name, which may be the "destination", may be registered as a different name (handle name or the like) in every SNS app that is the "means to transmit a message", even in a case where the personal name signifies an identical person. In this case, the SNS app, which is the "means to transmit a message", may be identified on the basis of the search result of the word corresponding to the "destination".

Furthermore, in a case where the intent of the contents of the user's speech is to "look for a travel destination" and the slot is the "location", a search range of words corresponding to the "location" is a list of names of foreign countries/cities or a list of prefectures in Japan. In a case where the intent of the contents of the user's speech is to "look for a supermarket" and the slot is the "location", the search range of words corresponding to the "location" is names of cities, wards, and towns of an area surrounding user's home.

In addition, in a case where the intent of the contents of the user's speech is to "search for a news" and the slot is the "location", the search range of words corresponding to the "location" is city names in the entire world. In a case where the intent of the contents of the user's speech is to "find out how to change trains" and the slot is the "location", the search range of words corresponding to the "location" is station names.

As such, even in a case where the slot is the "location", the search range thereof differs depending on the intent of the contents of the user's speech.

It is to be noted that in a case where the intent of the contents of the user's speech is to "make a phone call" and the slot is a "(call) partner", a search range of words corresponding to the "partner" is persons whose telephone numbers are registered in the telephone directory.

Furthermore, even in the case of the same slot or the same intent, the search range also differs depending on surrounding situations of the user (surrounding environment or conditions of the user).

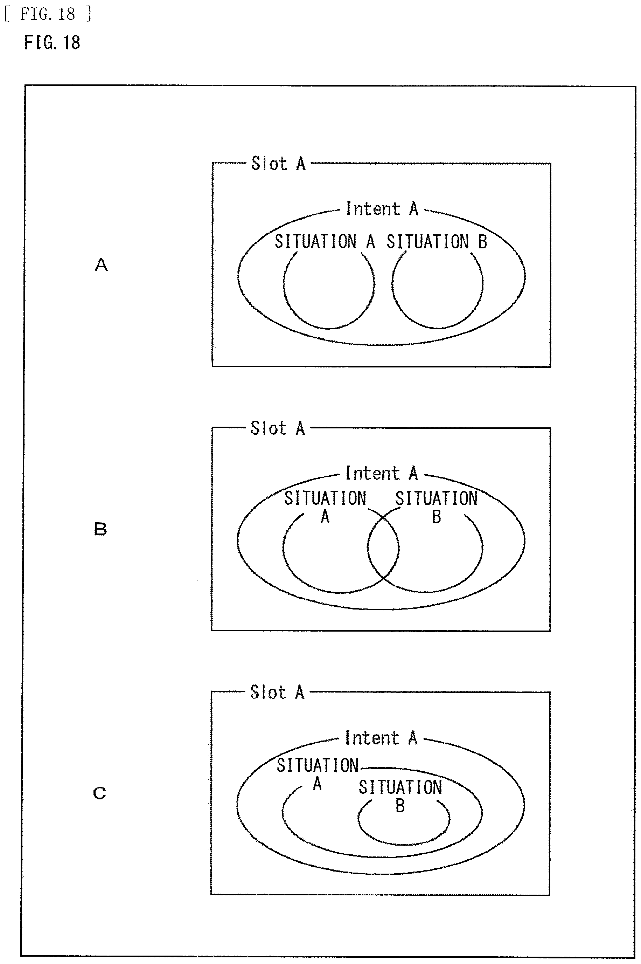

FIG. 18 is a diagram illustrating an example of a search range corresponding to the surrounding situations of the user (hereinafter simply referred to as situations).

In any of the three examples illustrated in FIG. 18, a candidate for replacement corresponding to situation A and a candidate for replacement corresponding to situation B are included in a search range corresponding to the slot A and the intent A.

In A of FIG. 18, is the example illustrated in which the candidate for replacement corresponding to the situation A and the candidate for replacement corresponding to the situation B have no mutually common element.

In B of FIG. 18, the example is illustrated in in which the candidate for replacement corresponding to the situation A and the candidate for replacement corresponding to the situation B have the mutually common elements in some portions thereof.

In C of FIG. 18, the example is illustrated in which the candidate for replacement corresponding to the situation A includes all elements of the candidate for replacement corresponding to the situation B.

That is, the search unit 55 retrieves the candidate for replacement of the word corresponding to the slot, from the search range corresponding to the slot, the intent of the text on which the semantic analysis has been performed, and the surrounding situations of the user.

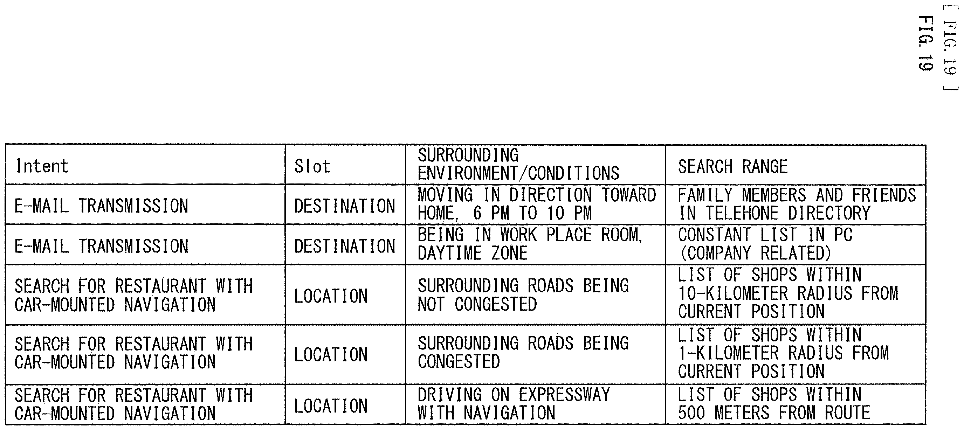

FIG. 19 is a diagram explaining about a specific example of the search range corresponding to the surrounding situations of the user.

In a case where the intent of the contents of the user's speech is the "e-mail transmission", the slot is the "destination", and the surrounding environment/conditions of the user are that the user is moving in a direction to the user's home, and a time zone is between 6 PM and 10 PM, a search range of words corresponding to the "destination" is family members or friends in the telephone directory. In a case where the intent of the contents of the user's speech is the "e-mail transmission", the slot is the "destination", and the surrounding environment/conditions of the user are that the user is in a room of a work place and the time zone is a daytime zone, the search range of words corresponding to the "destination" is company-related destinations in a destination list of a personal computer (PC).

In addition, in an unillustrated case where the intent of the contents of the user's speech is the "e-mail transmission", the slot is the "destination", and the surrounding environment/conditions of the user are that the user is at home, it is also possible to set the search range of words corresponding to the "destination" to persons who are in the phone directory and other than the family members.

As such, even in a case where the intent is the "e-mail transmission" and the slot is the "destination", the search range thereof differs depending on the surrounding situations of the user.

Furthermore, in a case where the intent of the contents of the user's speech is to "look for a restaurant with a car-mounted navigation system", the slot is the "location", and surrounding roads are not congested, the search range of words corresponding to the "location" is a list of shops located within a 10-kilometer radius from a current position. In a case where the intent of the contents of the user's speech is to "look for a restaurant with a car-mounted navigation system", the slot is the "location", and the surrounding roads are congested, the search range of words corresponding to the "location" is a list of shops located within a 1-kilometer radius from the current position. In a case where the intent of the contents of the user's speech is to "look for a restaurant with a car-mounted navigation system", the slot is the "location", and the user is driving on expressway while using the navigation system, the search range of words corresponding to the "location" is a list of shops located within 500 meters on a route to the destination

As such, even in a case where the intent is the "e-mail transmission" and the slot is the "destination", the search range differs depending on the surrounding situations of the user.

It is to be noted that in the aforementioned examples, although the slot in the contents of the user's speech is the "destination" or the "location", the "call partner", or the like, the slot is not limited thereto.

For example, in a case where the user has said "Send a message that we will meet around 10:30 tomorrow", "time " of "10:30" may be identified as the slot.

In addition, in a case where the user has said "Take a note that I will get 3,000 yen back", a "numeric value" of "3000" may be identified as the slot.

Furthermore, in a case where the user has said "Send back a message "Thank you" to Mikel, "Thank you" which is "English" (partially used foreign language) may be identified as the slot.

### <5. Third Embodiment>

The present technology is also applicable to cloud computing.

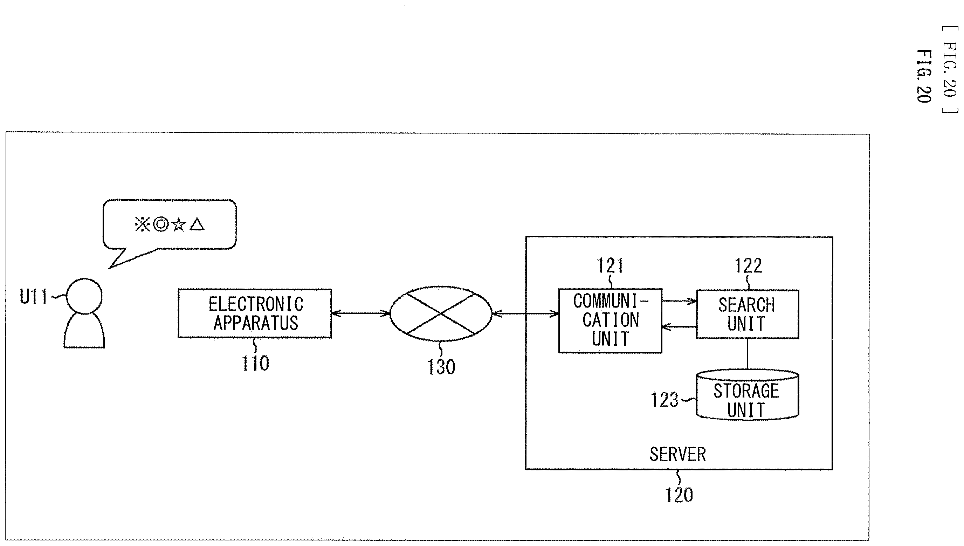

For example, as illustrated in FIG. 20, an electronic apparatus 110 performs the speech recognition of speech of a user U11 and transmits the result of the semantic analysis of the text including the character strings obtained by the speech recognition to a server 120 via a network 130.

The server 120 includes a communication unit 121, a search unit 122, and a storage unit 123.

The communication unit 121 receives the text on which the semantic analysis has been performed and the result of the semantic analysis which are transmitted from the electronic apparatus 110 via the network 130.

The search unit 122 has same functions as the functions of the search unit 55 of FIG. 6 and retrieves a candidate for replacement of the word corresponding to the slot identified in the text from the electronic apparatus 110 by the semantic analysis. The search unit 122 transmits the text in which the word corresponding to the identified slot has been replaced, to the electronic apparatus 110 via the network 130.

The storage unit 123 has same functions as the functions of the storage unit 56 of FIG. 6 and stores data that is the candidate for replacement retrieved by the search unit 122. It is to be noted that the data to be stored in the storage unit 123 may be acquired from the electronic apparatus 110 via the network 130.

Specifically, for example, the server 120 manages a contact list or a list of installed apps stored by the electronic apparatus 110 and synchronizes them with a contact list or a list of installed apps stored in the storage unit 123. Here, in a case where the "destination" is identified as the slot, for example, the search unit 122 of the server 120 creates a destination list as a local speech recognition dictionary on the basis of the contact list stored in the storage unit 123, and starts the local speech recognition engine corresponding to the identified slot ("destination"). With this, the candidate for replacement of the word corresponding to the "destination" is retrieved. It is to be noted that, herein, the speech recognition engine that starts in the server 120 is also referred to as the local speech recognition engine.

Also in such a configuration, even though uncommon proper nouns or words known only to the user who has spoken are not registered in the dictionary, the user is able to obtain the speech recognition result that the user expects.

It is to be noted that although the electronic apparatus 110 performs the semantic analysis of the text including the character strings obtained by the speech recognition in the configuration illustrated in FIG. 20, provision of the semantic analysis unit 54 in the server 120 may allow the server 120 to perform the semantic analysis of the text.

### <6. Others>

### (Application Examples of Present Technology)

The present technology is applicable to an apparatus or a system, such as an agent apparatus of a user interaction type or a car navigation system, that operates in response to a spoken voice instruction.

Furthermore, the present technology is also applicable to home electronics products.

For example, in a case where the present technology has been applied to a refrigerator, processing of modifying the speech recognition result may be performed with "foodstuff' or a "family member name" as the slot. Acquisition of a correct speech recognition result makes it possible to confirm whether or not there is a specific foodstuff in a refrigerator or how it is preserved, or to provide a specific family member with the foodstuff in the refrigerator.

In this case, a search range of words corresponding to the "foodstuff" is a history of foodstuffs stored in the refrigerator or a history (receipts) of purchased foodstuffs. These histories may be set for each user (each family member).

### (Extension of Search Range)

In the aforementioned example, the candidate for replacement of the word corresponding to the identified slot is retrieved from the search range, such as a list prepared in advance or the like.

However, there are personal names or locations that are not registered in a list retained by an electronic apparatus but used by users only in daily conversations. Specifically, in the daily conversations, there are some cases where a certain person may be called with a nickname that is different from a name registered in the telephone directory or where shops in a town may be called not with a shop name included in map information but with a name of a shop owner.

In the present technology, learning may be performed to cause such a nickname or owner's name to be identified as the "destination" or the "location" on the basis of contents of the spoken voice of the user. As a result, it is possible to include the nickname in the search range corresponding to the "destination" or include the owner's name in the search range corresponding to the "location".

Furthermore, the learning may be performed to cause a personal name included in a message (log) exchanged in the SNS app or the like to be identified as the "destination". Natural language processing such as the semantic analysis makes identification of the personal name feasible. This makes it possible to include that personal name in the search range corresponding to the "destination".

The configuration as described above allows for improvement of modification precision of the speech recognition result.

It is to be noted that, the above description has been given on the assumption that the intent of the text on which the semantic analysis has been performed is identified correctly. In a case where the intent of the text has not been identified correctly, the intent may be estimated from the contents of the speech made in the past. In addition, a wizard may be operated that extends a domain such as contents/field/genre of the speech and the user may be caused to add that intent.

### (Configuration Example of Computer)

It is possible to perform the aforementioned series of processing by hardware or software. In a case where the series of processing is performed by software, a program that configures the software is installed from a program storage medium to a computer embedded in dedicated hardware, a general-purpose personal computer, or the like.

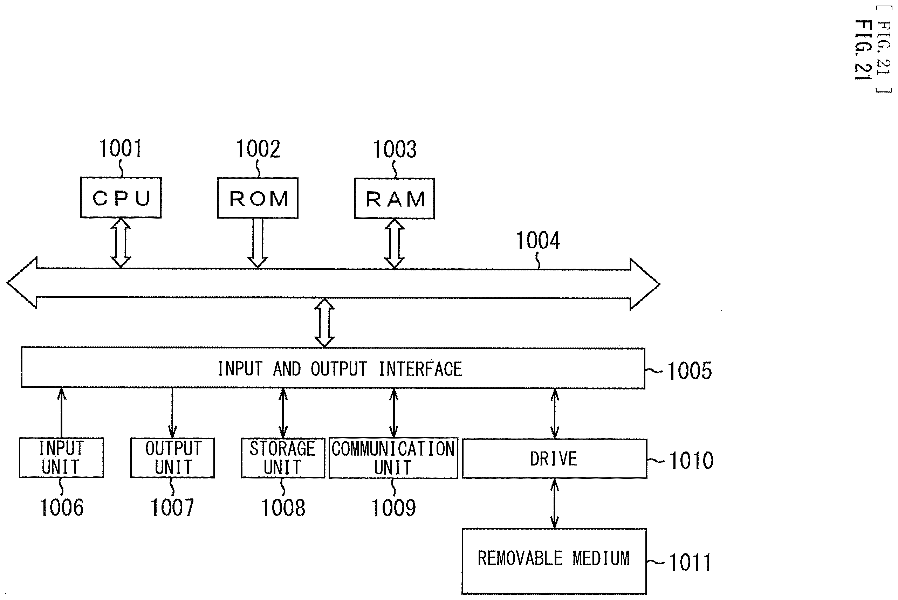

FIG. 21 is a block diagram illustrating a hardware configuration example of a computer that performs the aforementioned series of processing by a program.

The aforementioned electronic apparatus 10 and the server 120 are implemented by a computer having a configuration illustrated in FIG. 21.

A CPU 1001, a ROM 1002, and a RAM 1003 are connected to each other by a bus 1004.

An input and output interface 1005 is further coupled to the bus 1004. To the input and output interface 1005 are connected an input unit 1006 including a keyboard, a mouse, or the like, and an output unit 1007 including a display, a speaker, or the like. In addition, to the input and output interface 105 are connected a storage unit 1008 including a hard disk, the nonvolatile memory, or the like, a communication unit 1009 including a network interface, and a drive 1010 driving a removable medium 1011.

In the computer as configured above, the CPU 1001 performs the aforementioned series of processing, for example, by loading the program stored in the storage unit 1008 to the RAM 1003 via the input and output interface 1005 and the bus 1004 and executing the program.

The program executed by the CPU 1001 is provided by being recorded in the removable medium 1011, for example, or via a wired or wireless transmission medium such as a local area network, the Internet, or digital broadcasting, and installed in the storage unit 1008.

It is to be noted that the program to be executed by the computer may be a program that is processed in chronological order along the order described herein or a program that is processed concurrently or at necessary timing such as when the program has been called.

It is to be noted that the embodiments of the present technology are not limited to the aforementioned embodiments, and various changes may be made without departing from the gist of the present technology.

In addition, the effects described herein are merely illustrative and non-limiting, and other effects may further be provided.

It is to be noted that it is possible for the present technology to take configurations as described below.
(1) An information processor including:
   a search unit that retrieve a second word that is a candidate for replacement of a first word with a predetermined attribute, the predetermined attribute being identified by a semantic analysis in a text including character strings obtained by speech recognition.
(2) The information processor according to (1), in which the search unit retrieves the second word from a search range corresponding to the attribute.
(3) The information processor according to (1), in which the search unit retrieves the second word from a search range corresponding to the attribute and intent of the text on which the semantic analysis has been performed.
(4) The information processor according to (1), in which the search unit retrieves the second word from a search range corresponding to the attribute, intent of the text on which the semantic analysis has been performed, and surrounding situations of a user.
(5) The information processor according to any of (1) to (4), in which the search unit retrieves the second word on a basis of voice data of the first word, the first word being included in the text on which the semantic analysis has been performed.
(6) The information processor according to any of (1) to (4), in which the search unit retrieves the second word on a basis of a result of the speech recognition on user's speech corresponding to the first word.
(7) The information processor according to any of (1) to (6), in which in a case where a plurality of the attributes has been identified by the semantic analysis, the search unit retrieves the second word for each of the attributes.
(8) The information processor according to any of (1) to (7), in which the search unit retrieves the second word in accordance with a frequency of searches for each of the attributes.
(9) The information processor according to any of (1) to (8) further including:
   a speech recognition unit that performs the speech recognition on a user's speech; and
   a semantic analysis unit that performs the semantic analysis of the text including the character strings obtained by the speech recognition performed by the speech recognition unit.
(10) The information processor according to (9), in which
   the speech recognition unit performs large-vocabulary speech recognition, and
   the search unit retrieves the second word by performing local speech recognition corresponding to the attribute.
(11) The information processor according to any of (1) to (10) further including a display control unit that controls display of the text on which the semantic analysis has been performed.
(12) The information processor according to (11), in which the display control unit highlights the first word included in the text.
(13) The information processor according to (12), in which the display control unit highlights the first word in accordance with a degree of confidence of a result of speech recognition regarding the first word.
(14) The information processor according to any of (11) to (13), in which in a case where a user specifies the first word in the text being displayed, the search unit retrieves the second word.
(15) The information processor according to any of (11) to (14), in which the display control unit displays, as a result of the retrieving of the second word by the search unit, the text in which the first word has been replaced by the second word.
(16) The information processor according to (15), in which in a case where the search unit has retrieved two or more of the second words, the display control unit displays the second words one by one in the text while switching the second words in accordance with user's speech.
(17) An information processing method comprising
   retrieving a second word that is a candidate for replacement of a first word with a predetermined attribute by an information processor, the predetermined attribute being identified by a semantic analysis in a text including character strings obtained by speech recognition.
(18) A program that causes a computer to perform processing of
   retrieving a second word that is a candidate for replacement of a first word with a predetermined attribute, the predetermined attribute being identified in a text including character strings obtained by speech recognition.

### [Description of Reference Numerals]

10 Electronic apparatus, 51 voice input unit, 52 speech recognition unit, 53 large-vocabulary speech recognition dictionary, 54 semantic analysis unit, 55 search unit, 56 storage unit, 57 display control unit, 58 display unit, 110 electronic apparatus, 120 server, 121 communication unit, 122 search unit, 123 storage unit

## Claims

1. An information processor comprising:
a search unit that retrieve a second word that is a candidate for replacement of a first word with a predetermined attribute, the predetermined attribute being identified by a semantic analysis, in a text including character strings obtained by speech recognition.

2. The information processor according to claim 1, wherein the search unit retrieves the second word from a search range corresponding to the attribute.

3. The information processor according to claim 1, wherein the search unit retrieves the second word from a search range corresponding to the attribute and intent of the text on which the semantic analysis has been performed.

4. The information processor according to claim 1, wherein the search unit retrieves the second word from a search range corresponding to the attribute, intent of the text on which the semantic analysis has been performed, and surrounding situations of a user.

5. The information processor according to claim 1, wherein the search unit retrieves the second word on a basis of voice data of the first word, the first word being included in the text on which the semantic analysis has been performed.

6. The information processor according to claim 1, wherein the search unit retrieves the second word on a basis of a result of the speech recognition result on user's speech corresponding to the first word.

7. The information processor according to claim 1 wherein in a case where a plurality of the attributes has been identified by the semantic analysis, the search unit retrieves the second word for each of the attributes.

8. The information processor according to claim 1, wherein the search unit retrieves the second word in accordance with a frequency of searches for each of the attributes.

9. The information processor according to claim 1 further comprising:
a speech recognition unit that performs the speech recognition on a user's speech; and
a semantic analysis unit that performs the semantic analysis of the text including the character strings obtained by the speech recognition performed by the speech recognition unit.

10. The information processor according to claim 9, wherein
the speech recognition unit performs large-vocabulary speech recognition, and
the search unit retrieves the second word by performing local speech recognition corresponding to the attribute.

11. The information processor according to claim 1 further comprising a display control unit that controls display of the text on which the semantic analysis has been performed.

12. The information processor according to claim 11, wherein the display control unit highlights the first word included in the text.

13. The information processor according to claim 12, wherein the display control unit highlights the first word in accordance with a degree of confidence of a result of speech recognition regarding the first word.

14. The information processor according to claim 11, wherein in a case where a user specifies the first word in the text being displayed, the search unit retrieves the second word.

15. The information processor according to claim 11, wherein the display control unit displays, as a result of the retrieving of the second word by the search unit, the text in which the first word has been replaced by the second word.

16. The information processor according to claim 15, wherein in a case where the search unit has retrieved two or more of the second words, the display control unit displays the second words one by one in the text while switching the second words in accordance with user's speech.

17. An information processing method comprising retrieving a second word that is a candidate for replacement of a first word with a predetermined attribute by an information processor, the predetermined attribute being identified by a semantic analysis in a text including character strings obtained by speech recognition.

18. A program that causes a computer to perform processing of
retrieving a second word that is a candidate for replacement of a first word with a predetermined attribute, the predetermined attribute being identified in a text including character strings obtained by speech recognition.
